# FASCICULE DE BREVET EUROPEEN

(11) **EP 1 084 998 B1**
(45) Date de publication et mention de la délivrance du brevet: **07.12.2005**
(21) Numéro de dépôt: 00420186.9
(22) Date de dépôt: 06.09.2000
(51) Int. Cl.: C04B 35/80, C04B 35/101, B22D 41/02, C04B 35/622

(54) **Fibres céramiques pour le renforcement de matériaux réfractaires.**
Keramische Fasern zur Verstärkung von feuerfesten Werkstoffen
Ceramic fibers for reinforcing refractory materials

(30) Priorité: 20.09.1999 FR 9911908
(43) Date de publication de la demande: 21.03.2001
(73) Titulaire: PEM ABRASIFS-REFRACTAIRES, 92400 Courbevoie (FR)
(72) Inventeur: Alary, Jean-André, 74190 Le Fayet (FR)
(74) Mandataire: Mougeot, Jean-Claude

(56) Documents cités:
- EP-A- 0 395 087
- FR-A- 2 610 923
- US-A- 4 094 690
- US-A- 4 324 706
- PATENT ABSTRACTS OF JAPAN vol. 014, no. 215 (C-0716), 8 mai 1990 (1990-05-08) & JP 02 051474 A (KUROSAKI REFRACT CO LTD;OTHERS: 01), 21 février 1990 (1990-02-21) -& DATABASE WPI Section Ch, Week 199014 Derwent Publications Ltd., London, GB; Class L02, AN 1990-102101 XP002135809
- DATABASE WPI Section Ch, Week 198625 Derwent Publications Ltd., London, GB; Class L02, AN 1986-158749 XP002135810 & JP 61 091071 A (TEP KK), 9 mai 1986 (1986-05-09)
- DATABASE WPI Section Ch, Week 199403 Derwent Publications Ltd., London, GB; Class L02, AN 1994-018663 XP002135811 & JP 05 320623 A (MITSUI KOZAN KK), 3 décembre 1993 (1993-12-03)

## Description

### Domaine technique de l'invention

L'invention concerne le domaine des matériaux réfractaires et en particulier les bétons réfractaires renforcés mécaniquement par ajout de fibres.

### Etat de la technique

Les réfractaires classiques constitués d'oxydes métalliques et/ou de carbone présentent des caractéristiques mécaniques très limitées. Pour certaines applications, il s'avère que la durée de vie d'un garnissage réfractaire dépend plus de ses caractéristiques mécaniques que de ses qualités intrinsèques de réfractaire. C'est le cas par exemple pour le garnissage des poches de coulée, et en particulier pour le sommet des poches désigné sous le terme de " bec ", qui est le siège d'un encrassement permanent sous l'effet de la solidification progressive des produits coulés, et qui de ce fait est soumis à intervalles réguliers à des opérations de décrassage. Ce décrassage s'accompagne inévitablement d'arrachements lorsque les crasses à éliminer collent plus ou moins au réfractaire, ce qui est pratiquement toujours le cas.

On sait que, sur un bec de coulée en graphite, les crasses collent assez peu, mais l'exposition à l'air du graphite en limite la durée de vie à cause de l'oxydation ; par ailleurs il s'agit d'un matériau relativement conducteur thermiquement, ce qui favorise l'encrassement.

Selon l'état actuel de la technique, les meilleurs résultats en terme de durée de vie sont obtenus en utilisant des bétons réfractaires chargés de fibres métalliques.

### But de l'invention.

L'invention a pour but d'obtenir des matériaux réfractaires renforcés par des fibres rendus plus résistants par l'utilisation de fibres mieux adaptées que les fibres métalliques de l'art antérieur.

### Objet de l'invention.

L'invention a pour objet un béton réfractaire à base d'oxydes métalliques renforcé par l'incorporation de 0,1 à 50% en poids de fibres de bauxite frittée présentant un rapport longueur/diamètre supérieur à 10. Ces fibres présentent une forme cylindrique ou prismatique tronquée par deux surfaces, par exemple des surfaces sensiblement planes et perpendiculaires à l'axe du cylindre ou du prisme. Les formes prismatiques peuvent présenter une section comportant des concavités, par exemple une forme en étoile. Pour les fibres de section circulaire, on désigne par " diamètre " celui du cercle de la section. Pour les autres formes de section, il s'agit du diamètre du cercle de même surface que la section (diamètre équivalent). L'invention a également pour objet l'utilisation dudit béton réfractaire renforcé pour réaliser des pièces destinées à la coulée du silicium ou des alliages de silicium.

### Description de l'invention

Une étude expérimentale a permis de comparer les caractéristiques de pièces réfractaires réalisées à partir d'un béton réfractaire soit utilisé tel quel, soit renforcé avec des fibres métalliques, soit renforcé avec les fibres objet de la présente invention.

Les résultats de cette étude confirment que l'ajout de fibres dans un béton réfractaire en améliore bien les caractéristiques mécaniques. Mais cette étude montre aussi que, si les fibres métalliques restent le meilleur moyen d'augmenter la résistance à l'abrasion, les fibres de bauxite frittée objet de l'invention sont beaucoup plus performantes pour améliorer la résistance à la compression et à la flexion. De plus cette amélioration est obtenue avec des taux d'addition de fibres qui peuvent être nettement moins élevés que dans le cas de fibres métalliques.

Les formulations sélectionnées en fonction des caractéristiques mécaniques mesurées ont été essayées dans la construction de becs de poches de coulée, où elles se sont avérées plus performantes en ce qui concerne la durée de vie des pièces testées.

L'expérience a également montré que lors de la préparation du béton, la dispersion des fibres céramiques dans le mélange constituant le béton était beaucoup plus aisée que celle des fibres métalliques.

Les fibres selon l'invention peuvent être fabriquées par la technique habituelle d'élaboration de la bauxite frittée pour abrasifs, telle que décrite dans le brevet US 3239970 de Carborundum, c'est-à-dire par concassage de la bauxite naturelle, calcination, mélange à un liant pour former une pâte, extrusion de la pâte, découpe des fibres et frittage à une température de l'ordre de 1400°C. Le brevet indique que la section des produits extrudés peut être ronde, carrée, triangulaire ou polygonale. Une forme de section particulièrement bien adaptée pour la mise en oeuvre de l'invention est une section comportant des concavités, par exemple une forme en étoile, qui améliore l'ancrage de la fibre dans le matériau réfractaire. Le diamètre (ou diamètre équivalent) des fibres est compris de préférence entre 0,2 et 1 mm.

Dans le cas du renfort d'un béton réfractaire à base d'oxydes métalliques, notamment d'alumine et de silice, les constituants du béton sont mélangés à sec dans un malaxeur, les fibres sont incorporées ensuite au mélange, puis l'eau, et l'ensemble est cuit à une température de l'ordre de 1500°C.

Les bétons réfractaires selon l'invention peuvent être utilisés notamment pour des pièces d'équipements de coulée de métaux liquides à haut point de fusion, par exemple du silicium ou des alliages de silicium.

### Exemples

### Exemple 1

On a préparé des éprouvettes en béton réfractaire de différentes formes et dimensions selon la formulation suivante :

| | |
|---|---|
| Corindon brun en grains de 2 à 5 mm | 23 % |
| Corindon brun en grains de 0,2 à 2 mm | 37 % |
| Corindon brun en grains de 0 à 0,2 mm | 24 % |
| Particules de silice amorphe de 0 à 0,2 mm | 5 % |
| Alumine en grains de 0 à 0,2 mm | 6 % |
| Aluminate de chaux à 80 % d'Al₂O₃ | 5 % |

Avec ajout de 0,2 % de métaphosphate de sodium ( Na₂O, P₂O₅ ), 0,26 % de polyméthacrylate d'ammonium et 5,2 % d'eau.

Ces éprouvettes ont été séchées en étuve 24h à 110°C, puis soumises à un traitement thermique consistant en une montée en température de 2°C par minute jusqu'à 1500°C, suivie d'un maintien à 1500°C pendant 1 h.

Sur ces éprouvettes ont été mesurées :
◆ La résistance à la compression à froid sur éprouvettes cylindriques Ø = 28 mm, h = 90 mm, selon la norme ISO/DIS 10059.
   La résistance à la compression à chaud sur éprouvettes cylindriques Ø = 23 mm, h = 23 mm, selon la norme MO CI 306.
◆ La résistance à la flexion à froid sur éprouvettes cylindriques Ø = 28 mm, h = 50 mm, selon la norme ISO 5014.
   La résistance à la flexion à chaud sur éprouvettes en barreaux de 150 x 25 x 25 mm, selon la norme ISO 5013.
◆ La résistance à l'usure sur éprouvettes cylindriques Ø = 28 mm, h = 50 mm, plaquées suivant une de leurs faces circulaires contre un disque diamanté de grosseur de grains de 120 µm avec une force de 150 N, la vitesse tangentielle du disque au niveau de l'éprouvette étant de 1 m/s. La durée du test est de 10 minutes; le résultat est exprimé en cm³ de matériau arraché.

Les résultats obtenus avec la formule de béton indiquée ont été les suivants :
◆ Résistance à la compression à froid : 97,1 MPa
   Résistance à la compression à 600°C: non mesurée
   Résistance à la compression à 1200°C: non mesurée
◆ Résistance à la flexion à froid : 29,7 MPa
   Résistance à la flexion à 600°C : non mesurée
   Résistance à la flexion à 1200°C : non mesurée
◆ Résistance à l'usure : 0,65 cm³

### Exemple 2

On a préparé des éprouvettes en béton réfractaire de différentes formes et dimensions selon la formulation de l'exemple 1, à laquelle a été ajoutée 4% (en poids) de fibres métalliques constituées de fil d'acier inoxydable hémicylindrique de diamètre 1,5 mm, et de longueur comprise entre 25 et 30 mm.

Les mêmes mesures ont été refaites dans les mêmes conditions et les résultats obtenus avec cette formulation ont été les suivants :
◆ Résistance à la compression à froid : 81,4 MPa
   Résistance à la compression à 600°C: 173 MPa
   Résistance à la compression à 1200°C: 61,1 MPa
◆ Résistance à la flexion à froid: 27,9 MPa
   Résistance à la flexion à 600°C : 22,3 MPa
   Résistance à la flexion à 1200°C : 18,9 MPa
◆ Résistance à l'usure: 0,48 cm³

### Exemple 3

On a fabriqué, par concassage et calcination de bauxite naturelle, mélange à un liant, extrusion et frittage à 1400°C, un lot de référence constitué de fibres de bauxite frittée de densité 3,85, de forme cylindrique de diamètre 0,50 mm et de longueur comprise entre 5 mm et 12 mm, présentant une masse par unité de longueur de 0,76 mg/mm.

Puis on a préparé des éprouvettes en béton réfractaire de différentes formes et dimensions selon la formulation de l'exemple 1, à laquelle a été ajoutée 2% (en poids) de fibres préparées selon la formule ci-dessus.

Les mêmes mesures ont été refaites dans les mêmes conditions ; les résultats obtenus avec cette formulation ont été les suivants :
◆ Résistance à la compression à froid : 64,8 MPa
   Résistance à la compression à 600°C : 181 MPa
   Résistance à la compression à 1200°C : 86,2 MPa
◆ Résistance à la flexion à froid : 27,1 MPa
   Résistance à la flexion à 600°C.: 27,0 MPa
   Résistance à la flexion à 1200°C : 24,5 MPa
◆ Résistance à l'usure : 1,52 cm³

On constate qu'avec un taux massique de fibres deux fois moins élevé, l'utilisation de fibres en bauxite frittée conduit à une résistance à la compression et à la flexion à chaud nettement améliorées, et ce d'autant plus que la température est plus élevée.

### Exemple 4

On a préparé des éprouvettes en béton réfractaire de différentes formes et dimensions selon la formulation de l'exemple 1, à laquelle a été ajoutée 15% (en poids) de fibres préparées selon la formule indiquée à l'exemple 3.

Les mêmes mesures ont été refaites dans les mêmes conditions ; les résultats obtenus avec cette formulation ont été les suivants :
◆ Résistance à la compression à froid : 154 MPa
   Résistance à la compression à 600°C : 185 MPa
   Résistance à la compression à 1200°C :69,3 MPa
◆ Résistance à la flexion à froid : 43,2 MPa
   Résistance à la flexion à 600°C : 30,9 MPa
   Résistance à la flexion à 1200°C : 23,3 MPa
◆ Résistance à l'usure : 0,63 cm³

L'incorporation d'un taux de fibres nettement plus important améliore fortement la résistance mécanique en flexion et compression à froid, mais pas à haute température.

### Exemple 5

4 poches de coulée ont été construites avec des dimensions identiques ; les becs ont été fabriqués suivant les compositions de béton indiquées aux 4 exemples précédents. Ces poches ont été utilisées pour couler du silicium métallurgique. Après coulée les becs ont été décrassés dans les mêmes conditions au moyen de barres d'acier taillées en biseau et forcées entre crasses et garnissage réfractaire jusqu'à décollement de la crasse. Les poches étaient renvoyées à l'atelier de réparation pour réfection des becs lorsque l'usure du bec commençait à provoquer une usure de la carcasse métallique de la poche. Après trois rotations de chaque poche, les résultats de durée moyenne des becs ont été les suivants , exprimés en tonnes de silicium coulé :

| | |
|---|---|
| Garnissage de référence de l'exemple N°1 | 1000 t |
| Garnissage renforcé avec 4 % de fibres d'inox | 700 t |
| Garnissage renforcé avec 2 % de fibres de bauxite frittée | 1500 t |
| Garnissage renforcé avec 15 % de fibres de bauxite frittée | 2000 t |

On constate que, dans cette utilisation, le renfort de fibres métalliques est inopérant, alors que la durée de vie est améliorée avec les fibres selon l'invention, même avec un faible taux de renfort.

## Revendications

1. Béton réfractaire à base d'oxydes métalliques, **caractérisé en ce qu'**il est renforcé par l'adjonction de 0,1 à 50% en poids de fibres de bauxite frittée, présentant un rapport longueur/diamètre supérieur à 10.

2. Béton réfractaire selon la revendication 1, **caractérisé en ce que** les fibres présentent une section de forme cylindrique ou prismatique, tronquée par deux surfaces, en particulier des surfaces sensiblement planes et perpendiculaires à l'axe du cylindre ou du prisme.

3. Béton réfractaire selon la revendication 2, **caractérisé en ce que** les fibres présentent une section en forme d'étoile.

4. Utilisation d'un béton réfractaire selon l'une des revendications 1 à 3 pour des pièces destinées à la coulée du silicium ou des alliages de silicium.

## Patentansprüche

1. Feuerfester Beton auf Basis von Metalloxiden, **dadurch gekennzeichnet, dass** er durch Zugabe von 0,1 bis 50 Gew.-% Sinterbauxitfasern mit einem Länge-Durchmesser-Verhältnis größer als 10 verstärkt ist.

2. Feuerfester Beton nach Anspruch 1, **dadurch gekennzeichnet, dass** die Fasern einen Querschnitt zylindrischer oder prismatischer Form aufweisen, abgestutzt durch zwei Flächen, insbesondere im Wesentlichen ebene und zur Achse des Zylinders oder Prismas senkrecht stehende Flächen.

3. Feuerfester Beton nach Anspruch 2, **dadurch gekennzeichnet, dass** die Fasern einen sternförmigen Querschnitt aufweisen.

4. Verwendung eines feuerfesten Betons nach einem der Ansprüche 1 bis 3 für Werkstücke, die für den Guss von Silizium oder Siliziumlegierungen bestimmt sind.

## Claims

1. Refractory concrete based on metallic oxides, **characterised in that** it is reinforced by the addition of between 0.1% and 50% by weight of sintered bauxite fibres, with a length/diameter ratio of more than 10.

2. Refractory concrete according to claim 1, **characterised in that** the cross-section of the fibres is cylindrical or prismatic in shape, truncated by two surfaces, and particularly approximately plane surfaces perpendicular to the axis of the cylinder or the prism.

3. Refractory concrete according to claim 2, **characterised in that** the cross-section of the fibres is star-shaped.

4. Use of a refractory concrete according to one of claims 1 to 3, for parts intended for casting of silicon or silicon alloys.
